# EUROPÄISCHE PATENTSCHRIFT

(11) **EP 2 809 894 B1**
(45) Veröffentlichungstag und Bekanntmachung des Hinweises auf die Patenterteilung: **23.03.2016**
(21) Anmeldenummer: 12809634.4
(22) Anmeldetag: 29.11.2012
(51) Int. Cl.: F01L 1/18, B62D 65/10, F01L 1/08, F01L 1/20, F01L 1/24, F01L 1/34, F01L 13/00, F16K 31/524

(54) **MECHANISCH STEUERBARE VENTILTRIEBANORDNUNG**
MECHANICALLY CONTROLLABLE VALVE DRIVE ARRANGEMENT
ENSEMBLE DE COMMANDE DE SOUPAPES POUVANT ÊTRE ACTIONNÉ MÉCANIQUEMENT

(30) Priorität: 30.01.2012 DE 102012001633
(43) Veröffentlichungstag der Anmeldung: 10.12.2014
(73) Patentinhaber: Kolbenschmidt Pierburg Innovations GmbH, 74172 Neckarsulm (DE)
(72) Erfinder: NOWAK, Martin, 51379 Leverkusen (DE); GRIMM, Karsten, 52064 Aachen (DE); BREUER, Michael, 52152 Simmerath (DE); DISMON, Heinrich, 52538 Gangelt (DE)
(74) Vertreter: Patentanwälte ter Smitten Eberlein Rütten Partnerschaftsgesellschaft
(86) Internationale Anmeldenummer: PCT/EP2012/073923
(87) Internationale Veröffentlichungsnummer: WO 2013/113425

(56) Entgegenhaltungen:
- EP-A2- 1 760 278
- DE-A1- 10 237 560
- DE-A1- 10 323 665
- GB-A- 113 428
- GB-A- 2 020 389
- GB-A- 2 428 451

## Beschreibung

Die Erfindung betrifft eine Zwischenhebelanordnung für eine mechanisch steuerbare Ventiltriebanordnung, mit mindestens einem Zwischenhebel, der eine Arbeitskurve zur Wirkverbindung mit einer Schwenkhebelanordnung aufweist, wobei ein über eine Lagerwelle um eine Drehachse drehbar gelagertes Angriffsorgan vorgesehen ist. Des Weiteren betrifft die Erfindung eine Übertragungsanordnung mit einer derartigen Zwischenhebelanordnung sowie eine mechanisch steuerbare Ventiltriebanordnung.

Derartige Anordnungen sind im Brennkraftmaschinenbereich hinlänglich bekannt. So beschreiben die DE 103 23 665 A1, EP 1 760 278 A2, DE 10 2006 033 559 A1 und die DE 10 2007 022 266 A1 Ventiltriebanordnungen, die eine einstellbare Hubhöhe eines betreffenden Gaswechselventils aufweisen. Hierzu ist in beiden Ventiltriebanordnungen eine Zwischenhebelanordnung vorgesehen, die einerseits mit einer Nockenwelle in Verbindung steht, um das Gaswechselventil periodisch zu bewegen und andererseits ein Angriffsorgan aufweist, über das die maximal bzw. minimal zu erreichende Hubhöhe einstellbar ist. All diese Ventiltriebanordnungen weisen jedoch den Nachteil auf, dass nach Fertigung und nachfolgender Montage aufgrund von Fertigungstoleranzen die Ventiltriebanordnungen nicht den exakt gewünschten Ventilhub aufweisen. Bei der Anforderung eines identischen Ventilhubs über alle Ventile und Zylinder kann das insbesondere bei geringen Ventilhüben zu einem unbefriedigenden Laufverhalten des Motors führen.

Der Erfindung liegt daher die Aufgabe zugrunde, eine Zwischenhebelanordnung für eine mechanisch steuerbare Ventiltriebanordnung derart auszugestalten, dass die oben beschriebenen Nachteile vermieden werden können.

Diese Aufgabe wird dadurch gelöst, dass eine exzentrische Lagerung der Lagerwelle vorgesehen ist, wobei das Angriffsorgan kreisrund ausgeführt ist, wobei Feststellmittel vorgesehen sind, die die Lagerwelle in einer festgelegten Position fixieren, wobei die Feststellmittel aus einem mit einem ersten Ende der Lagerwelle korrespondierenden Federelement bestehen, durch das die Lagerwelle axial gespannt ist, wobei die Lagerwelle an einem zweiten Ende eine erste Verzahnung aufweist, die mit einer zweiten Verzahnung im Lagerbereich der Lagerwelle korrespondiert und durch welche die Lagerwelle in einer bestimmten Drehposition fixierbar ist. Als sekundärer Stand der Technik sind in diesem Zusammenhang die Druckschriften GB 113 428 A, DE 102 37 560 A1, GB 2 428 451 A, GB 2 020 389 A zu nennen, aus denen es bekannt ist, Rollen exzentrisch zu lagern. Durch die erfindungsgemäße Ausgestaltung einer derartigen Zwischenhebelanordnung ist es möglich, eine Ventiltriebanordnung sowohl im vormontierten Zustand als auch im Kraftfahrzeug verbauten Zustand auf einfache Weise hinsichtlich der Hubhöhe einzustellen. Fertigungstoleranzen bzw. -fehler und sogar Verschleißerscheinungen können auf diese Weise hinsichtlich der gewünschten Hubhöhe ausgeglichen werden. Die Angriffsorgane sind auf einfache Weise in Massenfertigung herstellbar. Aufgrund der Verzahnung ist eine stufenweise, genaue Verstellung möglich.

Eine besonders vorteilhafte Ausführungsform einer Zwischenhebelanordnung ist dadurch gegeben, dass die Zwischenhebel über eine Verbindungswelle an dem der Arbeitskurve entgegengesetzten Ende miteinander verbunden sind, wobei erste Rollen für die Kraftübertragung einer Nockenwelle auf die Zwischenhebel vorgesehen sind und eine zweite Rolle zwischen den Zwischenhebeln zur Führung in einer Kulisse vorgesehen ist.

Des Weiteren wird die Erfindung durch eine Übertragungsanordnung mit einer derartigen Zwischenhebelanordnung gelöst, wobei eine Schwenkhebelanordnung vorgesehen ist, die mit der Zwischenhebelanordnung in Wirkverbindung steht, wobei jeder Zwischenhebel mit einem Schwenkhebel korrespondiert.

Des Weiteren wird die Erfindung durch eine mechanisch steuerbare Ventiltriebanordnung mit mehreren in Reihe angeordneten Gaswechselventilen gelöst, denen entsprechende Zylinder zugeordnet sind, wobei zwei Gaswechselventilen eine Übertragungsanordnung zugeordnet ist, wobei jede Übertragungsanordnung im Zylinderkopf mittels Lagermitteln beweglich gelagert ist, wobei jede Übertragungsanordnung mit jeweils einer Ventilhubverstelleinrichtung und einer Nockenwelle in Wirkverbindung steht, wobei jede Ventilhubverstelleinrichtung ein drehbares Verstellorgan mit einem Exzenterorgan aufweist, das auf das Angriffsorgan der Übertragungsanordnung entgegen einer Vorspannkraft eines Federorgans einwirkt.

Die Erfindung wird nachfolgend anhand der Zeichnung näher erläutert. Hierin zeigen:
Figur 1 eine perspektivische Darstellung einer erfinderischer Ventiltriebanordnung,
Figur 2 eine perspektivische Ansicht einer Ausführungsform einer erfindungsgemäßen Zwischenhebelanordnung, und
Figur 3 eine Schnittansicht des Zwischenhebels aus Figur 2.

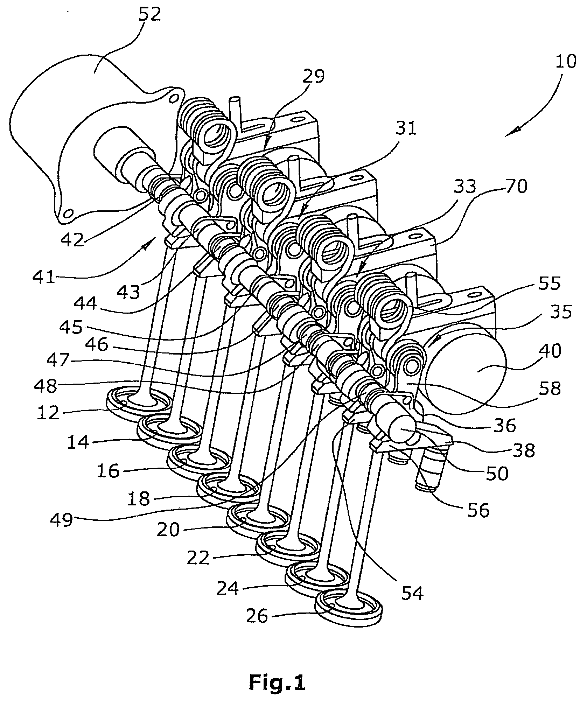

Figur 1 zeigt eine Ausführungsform einer erfindungsgemäßen Ventiltriebanordnung 10 mit mehreren in Reihe angeordneten Gaswechselventilen 12, 14, 16, 18, 20, 22, 24 und 26. Im vorliegenden Fall sind jeweils zwei Einlass-Gaswechselventile einem Zylinder der Brennkraftmaschine zugeordnet. Die mechanisch steuerbare Ventiltriebanordnung 10 weist im vorliegenden Fall vier Übertragungsanordnungen 29, 31, 33 und 35 auf, denen jeweils zwei Gaswechselventile 12, 14; 16, 18; 20, 22; 24, 26 zugeordnet sind. Dabei sind die Übertragungsanordnungen 29, 31, 33 und 35 auf bekannte Weise im Zylinderkopf mittels Lagermitteln gelagert. Die Lagermittel 36, 38 werden in der vorliegenden Figur 1 lediglich exemplarisch für die Lagerung eines Schwenkhebels 56 der Übertragungsanordnung 35 dargestellt. Darüber hinaus stehen die Übertragungsanordnungen 29, 31, 33 und 35 auf bekannte Weise mit einer Nockenwelle 40 in Wirkverbindung. Außerdem ist jede Übertragungsanordnung 29, 31, 33 und 35 durch Verstellorgane 42, 43; 44, 45; 46, 47 und 48, 49 einer Ventilhubverstelleinrichtung 41 derart ansteuerbar, dass ein geringerer oder höherer Ventilhub der Einlassventile 12, 14; 16, 18; 20, 22; 24, 26 einstellbar ist. Im vorliegenden Ausführungsbeispiel sind die Verstellorgane 42, 43, 44, 45, 46, 47 und 48, 49 jeweils den Einlassventilen 12, 14; 16, 18; 20, 22; 24, 26 zugeordnet und als Exzenterorgane ausgeführt, die auf einer Exzenterwelle 50 vorgesehen sind und auf Angriffsorgane 75 einwirken. Die Exzenterwelle 50 ist im vorliegenden Ausführungsbeispiel durch ein Antriebsorgan 52 auf bekannte Weise antreibbar. Es ist natürlich auch möglich, jedem einzelnen Gaswechselventil eine Übertragungsanordnung zuzuordnen. Als Antriebsorgan 52 kann ein sowohl vorwärts wie rückwärts laufender Drehantrieb genutzt werden. Die Exzenterwelle 50 kann damit derart angetrieben werden, dass in Abhängigkeit von der vorliegenden Position schnell und präzise der dem nächsten Betriebszustand entsprechende Ventilhub durch den Einsatz der entsprechenden Exzenterorgane gewählt werden kann. Auch Drehwinkel von > 360° sind damit realisierbar.

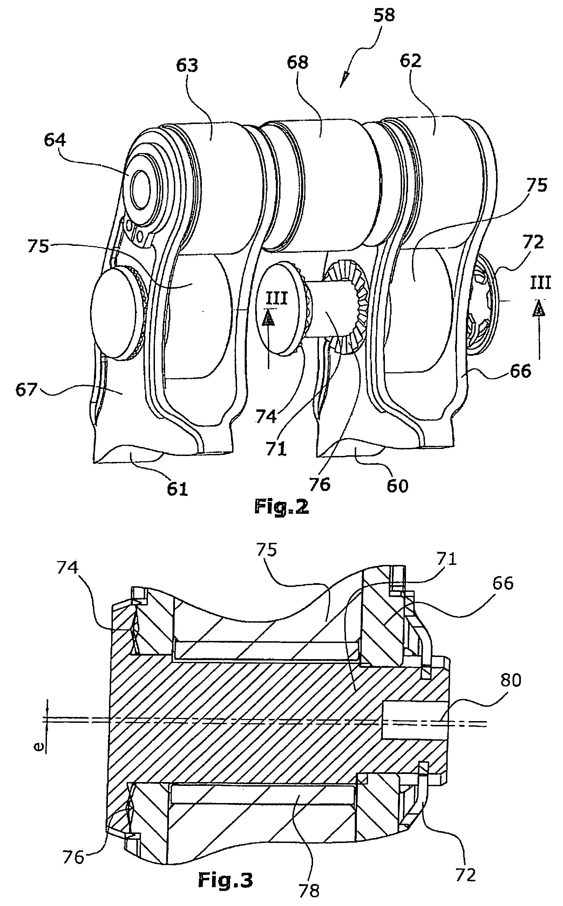

Im vorliegenden Ausführungsbeispiel ist eine Übertragungsanordnung 35 für die Gaswechselventile 24 und 26 vorgesehen. Die Übertragungsanordnung 35 besteht dabei aus einer Zwischenhebelanordnung 58 und zwei Schwenkhebelanordnungen 54 und 56, wobei die Zwischenhebelanordnung 58 über Arbeitskurven in Wirkverbindung mit den Schwenkhebelanordnungen 54 und 56 steht, und wobei die Schwenkhebelanordnung 56 mit einer Stirnfläche auf das Gaswechselventil 26 angreift und die Zwischenhebelanordnung 58 in Wirkverbindung mit der Ventilhubverstelleinrichtung 41 und der Nockenwelle 40 steht. Dabei greift das Verstellorgan 49 der Ventilhubverstelleinrichtung 41 entgegen einer Vorspannkraft einer Feder 55 auf ein nicht weiter dargestelltes Angriffsorgan (beispielsweise eine Rolle, siehe Figur 2) der Zwischenhebelanordnung 58 an. Die Zwischenhebelanordnung 58 greift mit in Figur 1 nicht weiter dargestellten Arbeitskurven 60, 61 auf die Schwenkhebelanordnung 54, 56 an.

Eine erfindungsgemäße Zwischenhebelanordnung 58 ist nun näher in Figur 2 dargestellt. Auf der den Arbeitskurven 60, 61 gegenüber gelegenen Seiten sind erste Rollen 62, 63 angeordnet, mit denen die Zwischenhebelanordnung 58 mit der Nockenwelle 40 auf bekannte Weise in Wirkverbindung steht. Diese erste Rollen 62, 63 sind wiederum auf einer Verbindungswelle 64 gelagert, die zwei benachbarte Zwischenhebel 66, 67 miteinander verbindet, wobei zwischen den ersten Rollen 62, 63 noch eine zweite Rolle 68 auf der Welle 64 angeordnet ist, die als Führungsrolle dient und in einer Kulisse 70 (siehe Figur 1) gelagert ist. Hinsichtlich der Funktion und Arbeitsweise einer derartigen Übertragungsanordnung wird explizit auf die deutsche Offenlegungsschrift DE 10 140 635 A1 verwiesen. Es sei darauf hingewiesen, dass eine Zwischenhebelanordnung 58 auch lediglich einen Zwischenhebel aufweisen kann, wobei dann eine der Arbeitskurve gegenüber gelegene Rolle sowohl mit der Nockenwelle 40 in Wirkverbindung steht, als auch die Führung in der Kulisse 70 gewährleistet.

Im vorliegenden Ausführungsbeispiel weist die Zwischenhebelanordnung 58 zwei Zwischenhebel 66, 67 auf und steht dementsprechend über zwei Arbeitskurven 60, 61 mit zwei nicht näher dargestellten Schwenkhebeln in Wirkverbindung. Insbesondere bei geringen Ventilhüben sollte sichergestellt sein, dass die Ventilhübe der einzelnen Gaswechselventile übereinstimmen. Hierzu ist nun im vorliegenden Ausführungsbeispiel vorgesehen, dass die Angriffsorgane als Rollen 75 derart exzentrisch mittels einer Lagerwelle 71 gelagert sind, dass ein Umfangspunkt der Rollen 75 bei Verdrehung um einen Winkel α eine von einem Kreisbogen abweichende Bogenform beschreibt. Die Feststellmittel bestehen im vorliegenden Ausführungsbeispiel aus einem mit einem ersten Ende der Lagerwelle 71 korrespondierenden Federelement 72, durch das die Lagerwelle 71 in einer bestimmten Drehposition fixierbar ist. Des Weiteren weist die Lagerwelle 71 an einem zweiten Ende eine erste Verzahnung 74 auf, die mit einer zweiten Verzahnung 76 im Lagerbereich der Lagerwelle korrespondiert. Durch ein einfaches Verdrehen der Lagerwelle im Betriebszustand oder aber auch während einer Vormontage kann nun der Ventilhub des zugehörigen Gaswechselventils justiert werden und auf diese Welse können Fertigungsungenauigkeiten oder aber auch Verschleißerscheinungen eliminiert werden.

Figur 3 zeigt eine Schnittansicht des Zwischenhebels 66 aus Figur 2. Das als Rolle ausgeführte Angriffsorgan 75 ist hier mittels eines Nadellagers 78 auf der Lagerwelle 71 drehbar gelagert. Die Lagerwelle 71 weist hinsichtlich einer Drehachse des Zwischenhebels 66 eine Exzentrizität e auf, wodurch sich bei Verdrehung um einen Winkel α eine von einem Kreisbogen abweichende Bogenform ergibt. zum Verdrehen im montierten Zustand ist hier in der Lagerwelle 71 ein Schlitz 80 vorgesehen, in den ein Werkzeug greifen kann, um gegen die Federkraft der Feder 72 die formschlüssige Verbindung der Verzahnung 74, 76 zu lösen und so ein Verdrehen der Lagerwelle 71 zu ermöglichen.

Durch die dargestellte Ausführungsform ist ein Höchstmaß an Flexibilität bei der Einstellung der Ventilhubhöhe gegeben. Es sollte jedoch deutlich sein, dass es auch möglich ist, bei einer derartigen Ausführungsform einer Zwischenhebelanordnung lediglich einen Zwischenhebel dahingehend auszuführen, dass Mittel vorgesehen sind, derart, dass ein Umfangspunkt des Angriffsorgans bei Verdrehung um einen Winkel α eine von einem Kreisbogen abweichende Bogenform beschreibt.

## Patentansprüche

1. Zwischenhebelanordnung für eine mechanisch steuerbare Ventiltriebanordnung, mit mindestens einem Zwischenhebel (66, 67), der eine Arbeitskurve (60, 61) zur Wirkverbindung mit einer Schwenkhebelanordnung (56, 57) aufweist, wobei ein über eine Lagerwelle (71) um eine Drehachse drehbar gelagertes Angriffsorgan (75) vorgesehen ist, **dadurch gekennzeichnet, dass** eine exzentrische Lagerung der Lagerwelle (71) vorgesehen ist, wobei das Angriffsorgan (75) kreisrund ausgeführt ist, wobei Feststellmittel (72, 74, 76) vorgesehen sind, die die Lagerwelle (71) in einer festgelegten Position fixieren, wobei die Feststellmittel (72, 74, 76) aus einem mit einem ersten Ende der Lagerwelle (71) korrespondierenden Federelement (72) bestehen, durch das die Lagerwelle (71) axial gespannt ist, wobei die Lagerwelle (71) an einem zweiten Ende eine erste Verzahnung (74) aufweist, die mit einer zweiten Verzahnung (76) im Lagerbereich der Lagerwelle (71) korrespondiert und durch welche die Lagerwelle (71) in einer bestimmten Drehposition fixierbar ist.

2. Zwischenhebelanordnung nach Anspruch 1, **dadurch gekennzeichnet, dass** die Zwischenhebel (66, 67) über eine Verbindungswelle an dem der Arbeitskurve (60, 61) entgegen gesetzten Ende miteinander verbunden sind, wobei erste Rollen (62, 63) für die Kraftübertragung einer Nockenwelle (40) auf die Zwischenhebel (66, 67) vorgesehen sind und eine zweite Rolle (68) zwischen den Zwischenhebeln (66, 67) zur Führung in einer Kulisse (70) vorgesehen ist.

3. Übertragungsanordnung mit einer Zwischenhebelanordnung nach einem der Ansprüche 1 oder 2, **dadurch gekennzeichnet, dass** eine Schwenkhebelanordnung (56) vorgesehen ist, die mit der Zwischenhebelanordnung (58) in Wirkverbindung steht, wobei jeder Zwischenhebel (66, 67) mit einem Schwenkhebel korrespondiert.

4. Mechanisch steuerbare Ventiltriebanordnung (10) mit mehreren in Reihe angeordneten Gaswechselventilen (12, 14, 16, 18, 20, 22, 24, 26), denen entsprechende Zylinder zugeordnet sind, wobei zwei Gaswechselventilen (12, 14; 16, 18; 20, 22; 24, 26) eine Übertragungsanordnung (29, 31, 33, 35) nach Anspruch 6 zugeordnet ist, **dadurch gekennzeichnet, dass** jede Übertragungsanordnung (29, 31, 33, 35) im Zylinderkopf mittels Lagermittel (36, 38) beweglich gelagert ist, wobei jede Übertragungsanordnung (29, 31, 33, 35) mit jeweils einer Ventilhubverstelleinrichtung (41) und einer Nockenwelle (40) in Wirkverbindung steht, wobei jede Ventilhubverstelleinrichtung (41) ein drehbares Verstellorgan (42, 43, 44, 45, 46, 47, 48, 49) mit einem Exzenterorgan aufweist, das auf das Angriffsorgan der Übertragungsanordnung (29, 31, 33, 35) entgegen einer Vorspannkraft eines Federorgans (55) einwirkt.

## Claims

1. An intermediate lever arrangement for a mechanically controllable valve drive arrangement, comprising at least one intermediate lever (66, 67) having a working cam (60, 61) for operative connection to a pivot lever arrangement (56, 57), wherein an engagement element (75) mounted rotatably about an axis of rotation by means of a bearing shaft (71) is provided, **characterized in that** an eccentric bearing support of the bearing shaft (71) is provided, wherein the engagement element (75) has a circular shape, wherein fixing means (72, 74, 76) are provided for fixing the bearing shaft (71) in a defined position, wherein the fixing means (72, 74, 76) consist of a spring element (72) corresponding with a first end of the bearing shaft (71), said spring element biasing the bearing shaft (71) in an axial direction, wherein the bearing shaft (71) at a second end comprises a first toothing (74) corresponding with a second toothing (76) in the bearing region of the bearing shaft (71) and by which the bearing shaft (71) can be fixed at a defined rotational position.

2. The intermediate lever arrangement according to claim 1, **characterized in that** the intermediate levers (66, 67) are connected to each other at the end opposite to the working cam (60, 61) via a connection shaft, wherein first rolls (62, 63) are provided for force transmission from a cam shaft (40) to the intermediate levers (66, 67) and a second roll (68) is provided between the intermediate levers (66, 67) for guidance in a sliding block (70).

3. A transmission arrangement comprising an intermediate lever arrangement according to claim 1 or 2, **characterized in that** a pivot lever arrangement (56) is provided which is in operative connection with the intermediate lever arrangement (58), wherein each intermediate lever (66, 67) corresponds with a pivot lever.

4. A mechanically controllable valve drive arrangement (10), comprising a plurality of serially arranged gas exchange valves (12, 14, 16, 18, 20, 22, 24, 26) which have corresponding cylinders assigned to them, wherein two gas exchange valves (12, 14; 16, 18; 20, 22; 24, 26) have a transmission arrangement (29, 31, 33, 35) according to claim 3 assigned to them, **characterized in that** each transmission arrangement (29, 31, 33, 35) is movably supported in the cylinder head by bearing means (36,38), wherein each transmission arrangement (29, 31, 33, 35) is in operative connection with respectively a valve stroke adjustment device (41) and a cam shaft (40), wherein each valve stroke adjustment (41) device comprises a rotatable adjustment element (42, 43, 44, 45, 46, 47, 48, 49) provided with an eccentric element acting on the engagement element of the transmission arrangement (29, 31, 33, 35) against the biasing force of a spring element (35).

## Revendications

1. Ensemble de leviers intermédiaires pour un dispositif d'entrainement de soupape à commande mécanique, avec au moins un levier intermédiaire (66, 67) ayant une came de travail (60, 61) pour liaison fonctionnelle avec un ensemble de leviers pivotants (56, 57), un élément d'engagement (75) étant prévu qui est supporté, par l'intermédiaire d'un arbre de support (71), pour rotation autour un axe de rotation, **caractérisé en ce que** l'arbre de support (71) est supporté de manière excentrique, un élément d*engagement (75) étant réalisé en forme circulaire, des moyens de blocage (72, 74, 76) étant prévus qui verrouillent l'arbre de support (71) dans une position définie, les moyens de blocage (72, 74, 76) étant formés par un élément de ressort (72) coopérant avec une première extrémité de l'arbre de support (71), par lequel élément l'arbre de support (71) est tendu axialement, l'arbre de support (71) comprenant une première denture (74) à une deuxième extrémité coopérant avec une deuxième denture (76) dans la région du support de l'arbre de support (71) et par laquelle l'arbre de support (71) peut être fixée dans une position de rotation définie.

2. Ensemble de leviers intermédiaires selon la revendication 1, **caractérisée en ce que** les leviers intermédiaires (66, 67) sont liés l'un à l'autre, par un arbre de liaison, à leur extrémité opposée au came de travail (60, 61), premiers rouleaux (62, 63) étant prévus pour la transmission de force à partir d'un arbre à came (40) aux leviers intermédiaires (66, 67), et un deuxième rouleau (68) étant prévu entre les leviers intermédiaires (66, 67) pour le guidage dans une coulisse (70).

3. Ensemble de transmission avec un ensemble de leviers intermédiaires selon l'une des revendications 1 ou 2, **caractérisée en ce qu'**un ensemble de leviers pivotants (56) est prévus qui est en liaison fonctionnelle avec l'ensemble de leviers intermédiaires (58), chaque levier intermédiaire (66, 67) coopérant avec un levier pivotant.

4. Ensemble d'entrainement de soupape (10) pouvant être commandé mécaniquement, avec plusieurs de soupapes d'échange de gaz (12, 14, 16, 18, 20, 22, 24, 26) auxquelles sont assignés des cylindres correspondants, un ensemble de transmission (29, 31, 33, 35) selon la revendication 3 étant respectivement assigné à deux soupapes d'échange de gaz (12, 14; 16, 18; 20, 22; 24, 26), **caractérisé en ce que** chaque ensemble de transmission (29, 31, 33, 35) est supporté de manière mobile dans la tête de cylindre à l'aide de moyens de support (36, 38), chaque ensemble de transmission (29, 31, 33, 35) étant respectivement lié fonctionnellement avec un moyen d'ajustage de levée de soupape (41) et un arbre à came (40), chaque moyen d'ajustage de levée de soupape (41) comportant un élément d'ajustage (42, 43, 44, 45, 46, 47, 48, 49) rotatif avec un élément excentrique agissant sur l'élément d'engagement de l'ensemble de transmission (29, 31, 33, 35) à l'encontre d'une force de pré-tension d'un élément de ressort (55).
